# EUROPÄISCHE PATENTSCHRIFT

(11) **EP 0 417 212 B1**
(45) Veröffentlichungstag und Bekanntmachung des Hinweises auf die Patenterteilung: **02.03.1994**
(21) Anmeldenummer: 89913076.9
(22) Anmeldetag: 07.12.1989
(51) Int. Cl.: A61C 17/02, A46B 11/06, A61C 15/00

(54) **REINIGUNGSDÜSE FÜR DIE PFLEGE DER ZÄHNE**
CLEANING NOZZLE FOR DENTAL HYGIENE
AJUTAGE DE NETTOYAGE POUR LES SOINS DENTAIRES

(30) Priorität: 08.12.1988 CH 4537/88
(43) Veröffentlichungstag der Anmeldung: 20.03.1991
(73) Patentinhaber: TRISA BÜRSTENFABRIK AG TRIENGEN, CH-6234 Triengen (CH)
(72) Erfinder: FISCHER, Franz, CH-6234 Triengen (CH)
(74) Vertreter: Patentanwälte Schaad, Balass, Menzl & Partner AG
(86) Internationale Anmeldenummer: CH8900214
(87) Internationale Veröffentlichungsnummer: WO9006091

(56) Entgegenhaltungen:
- CH-A- 667 382
- DE-U- 8 424 911
- DE-U- 8 809 217
- FR-A- 2 288 495
- US-A- 3 256 604

## Beschreibung

Die vorliegende Erfindung betrifft eine Reinigungsdüse nach Oberbegriff von Anspruch 1, sowie ein mit einer solchen Reinigungsdüse versehenes Zahnpflegegerät.

Eine Reinigungsdüse gemäß dem ersten Teil von Anspruch 1 ist aus der DE-U-8 424 911 bekannt.

Derartige Reinigungsdüsen werden individuell benutzt und sind wegnehmbar an ein Basisgerät anschliessbar, welches mit Wassertank und Wasserpumpe versehen, die Düse über eine Wasserzuführleitung mit Wasser versorgt. Mit dem aus der Düse abgegebenen Wasserstrahl lassen sich in Zahnfleischtaschen und in Ritzen zwischen den Zähnen abgesetzte Speisereste zuverlässig herausspülen. Damit ist auch an schlecht zugänglichen Stellen eine recht gute Zahnreinigung gegeben. Der je nach Basisgerät z.B. in seiner Intensität regelbare Wasserstrahl bewirkt weiter eine Massage des Zahnfleisches. Dadurch wird dessen Durchblutung angeregt, die Festigung von empfindlichem Zahnfleisch ermöglicht und z.B. Zahnfleischschwund bekämpft.

Obschon sich diese Vorteile bestätigt haben, hat es sich gezeigt, dass bereits vorhandener Zahnbelag durch den Wasserstrahl nicht in genügendem Mass entfernbar ist. Damit ist trotz seriösem Gebrauch einer Reinigungsdüse der beschriebenen Art die Bildung von Zahnstein durch sich verfestigenden Zahnbelag nicht vermeidbar; die Reinigung der Zähne bleibt unvollkommen.

Entsprechend ist es Aufgabe der vorliegenden Erfindung, eine Reinigungsdüse zur Pflege der Zähne mit verbesserter Wirkung zu schaffen, welche nebst vorteilhafter Einwirkung auf das Zahnfleisch eine vollkommene Reinigung der Zähne speziell an schlecht zugänglichen Stellen ermöglicht.

Zur Lösung dieser Aufgabe weist die erfindungsgemässe Reinigungsdüse die kennzeichnenden Merkmale von Anspruch 1 auf.

Da das Bürstenelement bezüglich des Wegs des Wasserstrahls so angeordnet ist, dass letzterer mindestens teilweise frei am Bürstenelement vorbeiläuft und somit nicht an diesem zerstäubt wird, wird der Zahnbelag durch Zusammenwirken des Wasserstrahls und der Borsten des Bürstenelementes an der Zahnoberfläche abgelöst und entfernt. An unter Einwirkung der Borsten nur angelösten Belagsteilen kann der kontinuierlich wirkende Wasserstrahl angreifen und diese vollständig ablösen.

Frisch abgelöste Partikel, sei es durch die Borsten oder durch den Wasserstrahl, werden sofort aus dem Bürstbereich weg und in die Mundhöhle geschwemmt. Dies ist für eine vollständige Zahnreinigung wichtig. Verbleibende Bestandteile des Zahnbelags könnten sonst durch die vom Benützer in Bewegung gehaltenen Borsten weitertransportiert und z.B. in eine nächste Ritze oder Zahnfleischtasche geschoben werden. Von den Borsten hin und hergeschobenes Belagsmaterial setzt sich auch bevorzugt in kariösen Vertiefungen ab und beschleunigt damit den Zahnzerfall.

Durch den mindestens teilweise am Bürstenelement vorbeilaufenden Wasserstrahl werden Speisereste einwandfrei auch aus schlecht zugänglichen Stellen ausgespült und das Zahnfleisch massiert, womit eine einwandfreie und vollständige Reinigung mit vorteilhafter Wirkung auf das Zahnfleisch gegeben ist.

Bevorzugte Ausführungsformen der erfindungsgemässen Reinigungsause besitzen Merkmale der abhängigen Ansprüche.

Ausführungsbeispiele von erfindungsgemässen Reinigungsdüsen werden nachstehend anhand der Figuren näher erläutert.

Es zeigt:
- Fig. 1: eine perspektivische Ansicht einer Reinigungsdüse;
- Fig. 2: einen Längsschnitt durch das den Düsenausgang aufweisende Ende der Düse von Fig. 1;
- Fig. 3: einen Längsschnitt durch das den Düsenausgang aufweisende Ende einer weiteren Ausführungsform der Reinigungsdüse, und
- Fig. 4 bis 9: je einen Längsschnitt durch das den Düsenausging aufweisende Ende weiterer Ausführungsformen der Reinigungsdüse mit auswechselbaren Bürstenelementen.

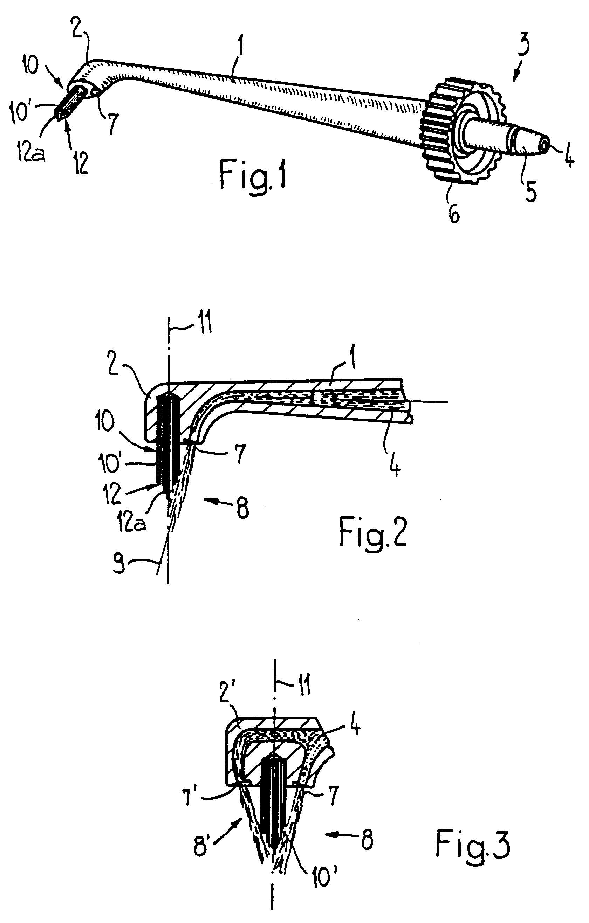

Die in Fig. 1 und 2 gezeigte Reinigungsdüse besteht aus einem Düsenkörper 1 mit einem Kopf 2 und einem Kupplungsteil 3.

Der Kupplungsteil 3 weist einen von einem Kanal 4 durchsetzten Anschlussdorn 5 auf, der in eine Wasserzuführleitung eines nicht dargestellten, mit einer Pumpe ausgerüsteten Zahnpflege-Basisgeräts eingesteckt werden kann. Zur Erleichterung der Handhabung ist der Düsenkörper 1 mit einem Griffteil 6 versehen.

Der Düsenkörper 1 ist als Kanüle ausgebildet, deren Wasserkanal 4 zu einem im Kopf 2 angeordneten Düsenausgang 7 verläuft, welcher derart ausgeformt ist, dass er einen gerichteten Wasserstrahl 8 mit einer Längsachse 9 abgibt (Fig. 2). Im Kopf 2 ist weiter ein zum Düsenausgang 7 benachbart angeordnetes Bürstenelement 10 mit einem im Querschnitt runden Borstenbüschel 10' vorgesehen, dessen Längsachse mit 11 (Fig. 2) bezeichnet ist. Es besitzt ein zugespitztes Ende 12 mit einer kegelförmigen Endfläche 12a. Der Kopf 2 ist weiter gegenüber dem restlichen Teil des Düsenkörpers 1 abgekröpft, was dem Benützer erlaubt, auch die hinten in der Mundhöhle gelegenen Backenzähne allseitig einwandfrei zu reinigen.

Fig. 2 zeigt einen Längsschnitt durch das kopfseitige Ende des Düsenkörpers 1. Der Kanal 4 verläuft entsprechend der Abkröpfung des Kopfs 2 bogenförmig zum Düsenausgang 7, welcher einen Wasserstrahl 8 erzeugt, dessen Achse 9 im spitzen Winkel zu der Achse 11 des Bürstenelementes 10 bzw. des Borstenbüschels 10' läuft. Das im Wirkbereich des Wasserstrahls 8 arbeitende Borstenbüschel 10' berührt den Strahl mit seiner Endfläche 12a. Mit dem zugespitzten Ende 12 des Borstenbüschels 10' können auch enge Ritzen zwischen den Zähnen oder z.B. der Zahnhals im Uebergang zum Zahnfleisch bearbeitet werden. Obwohl das Borstenbüschel 10' im Wirkbereich des Wasserstrahls 8 arbeitet, verläuft letzterer im wesentlichen ungestört, sodass er mit voller Intensität auf der Zahnoberfläche auftrifft, nur angelöste Belagsteile ablösen und abgelöstes Material aus dem Bürstbereich entfernen kann, bevor dieses durch das Borstenbüschel 10' weitergeschoben und an einem unerwünschten Ort deponiert werden kann.

Fig. 3 zeigt den modifizierten Kopf 2' einer für gewisse Anwendungen vorteilhaften weiteren Ausführungsform der Reinigungsdüse. Im Kopf 2' ist ein weiterer Düsenausgang 7' vorgesehen und derart ausgebildet, dass der daraus abgegebene Wasserstrahl 8' dieselben geometrischen Beziehungen zum Borstenbüschel 10' aufweist wie der Strahl 8 aus dem Düsenausgang 7. Damit vergrössert sich der Wirkbereich des Wasserstrahls 8, 8', was z.B. für die blind vorzunehmende Reinigung der hintersten Backenzähne vorteilhaft ist.

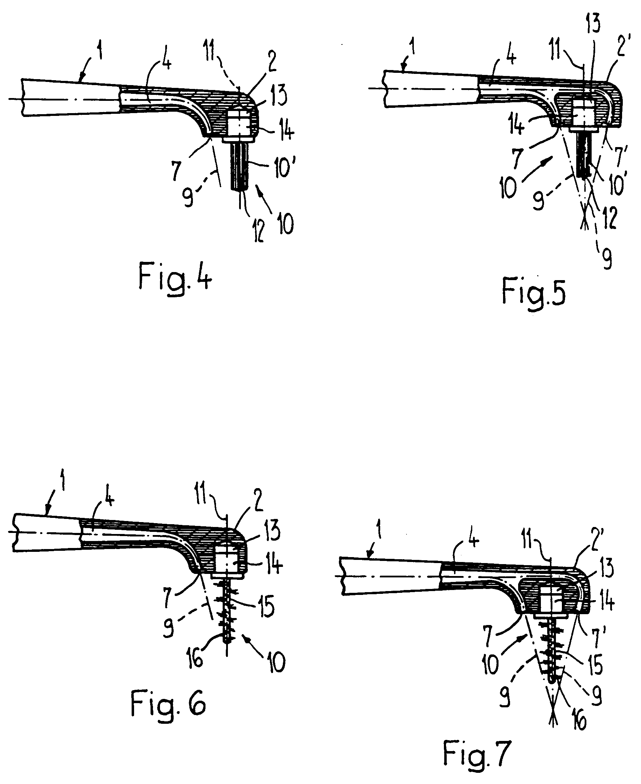

Die Figuren 4 bis 9 zeigen weitere Ausbildungsformen der Reingungsdüse, wobei die Ausbildungsform des Kopfes 2 in den Figuren 4, 6, 8 und 9 im wesentlichen der Ausbildungsform des Kopfes 2 gemäss Figur 2 entspricht und die Ausführungsform des Kopfes 2' in den Figuren 5 und 7 im wesentlichen dem Kopf 2' gemäss Figur 3 gleich ist. Auf die Ausbildung des Kanales 4 und des Düsenausgangs 7 und gegebenenfalls 7' wird nicht mehr weiter eingegangen. Der Wasserstrahl ist in diesen Figuren durch seine Längsachse 9 angedeutet und die Längsachse des Bürstenelementes 10 ist mit 11 bezeichnet.

Bei den Ausführungsformen gemäss den Fig. 4 bis 7 ist im Kopf 2, 2' des Düsenkörpers t ein Sackloch 13 vorgesehen, dessen Achse mit der Längsachse 11 des Bürstenelementes 10 zusammenfällt. In das Sackloch 13 ist eine zylinderförmige Büchse 14 eingesteckt. Bei der Ausführungsform gemäss den Figuren 4 und 5 ist in der Büchse 14 ein Borstenbüschel 10' verankert, welches dem Borstenbüschel 10' der Variante gemäss den Figuren 1 bis 3 entspricht. Bei der Ausführungsform gemäss den Figuren 6 und 7 ist in der Büchse 14 ein Tragorgan 15 für die Borsten 16 eines Bürstenelementes 10 befestigt. Das Tragorgan 15 besteht beispielsweise aus zwei miteinander verdrillten Drähten, zwischen welchen die bezüglich der Längsachse 11 in radialer Richtung abstehenden Borsten 16 angeordnet sind. Durch das Verdrillen dieser Drähte werden die Borsten 16 gehalten und es wird eine wendelartige Anordnung der Borsten 16 erreicht, wie dies aus den Figuren 6 und 7 erkennbar ist.

Die Büchse 14 ist lösbar im Kopf 2 gehalten, sodass verschiedene Bürstenelemente 10 gegeneinander austauschbar sind oder ein abgenütztes Bürstenelement 10 durch ein neues ersetzbar ist.

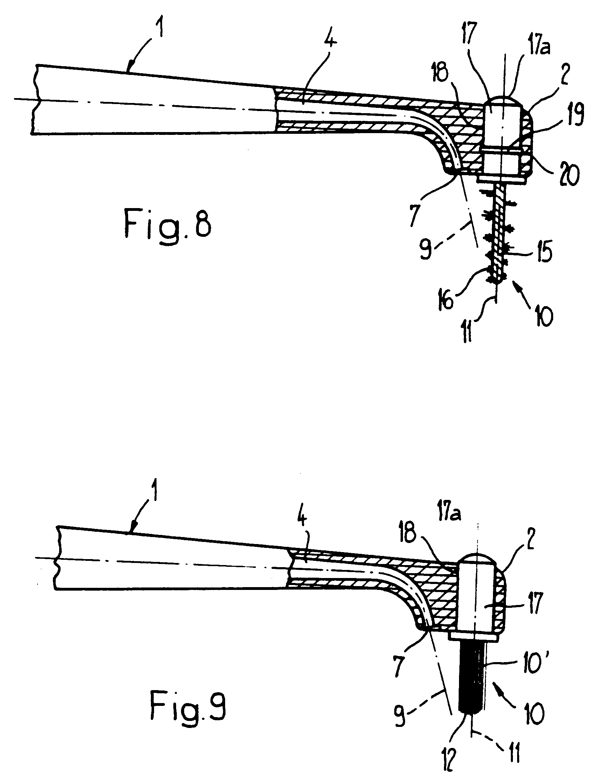

Die beiden in den Figuren 8 und 9 gezeigten Ausführungsformen unterscheiden sich von denjenigen gemäss den Figuren 6 bzw. 4 durch die andersartige Halterung der Bürstenelemente 10 im Kopf 2.

Das Tragorgan 15 für die Borsten 16 (Fig. 8) bzw. das Borstenbüschel 10 (Fig. 9) sind in einem zylinderischen Halteteil 17 verankert, der sich durch eine Durchgangsbohrung 18 im Kopf 2 hindurcherstreckt und in diesem auf geeignete Weise lösbar gehalten ist. In den Figuren 8 und 9 sind zwei mögliche, besonders einfache Lösungen für die Halterung des Halteteils 17 im Kopf 2 gezeigt.

Bei der Ausführungsform gemäss FIg. 8 weist der Halteteil 17 einen ringförmigen Wulst 19 auf, der in eine Ringnut 20 im Kopf 2 einrastet. Diese Rastverbindung kann auch auf andere Weise ausgeführt sein.

Demgegenüber ist bei der Variante gemäss Fig. 9 der Halteteil 17 durch Reibschluss im Kopf 2 gehalten.

Bei beiden Ausführungsformen ist der Halteteil 17 am oberen Ende mit einer Abrundung 17a versehen, die etwas über den Kopf 2 vorsteht. Durch Drücken auf diese Abrundung 17a kann der Halteteil 17 aus der Bohrung 18 herausgedrückt werden.

Es ist zu beachten, dass bei allen Ausführungsformen der Reinigungsdüse die Längsachse 9 des Wasserstrahls 8, 8' am freien Ende 12 der Bürstenelemete 10 vorbeiverläuft.

Bei einer weiteren Ausführungsform kann abweichend zu den dargestellten Ausführungen mit zwei Düsenausgängen 7, 7' ein einziger, ringförmig um das Bürstenelement herumverlaufender Düsenausgang vorgesehen sein.

Weiter ist es möglich, das Ende des Bürstenelementes unmittelbar benachbart zum Wasserstrahl oder in den Wasserstrahl hineinragend anzuordnen. Bedingung ist jedoch, dass das Bürsten im Wirkbereich des Wasserstrahls stattfindet und dass dieser soweit frei am Ende des Bürstenelementes vorbeiläuft, d.h. ungestört ist, dass in der Folge seine Intensität zum Ablösen von angelöstem Zahnbelag und Wegschwemmen der Partikel aus dem Bürstbereich ausreicht.

Der Kupplungsteil kann anstelle des Anschlussdorns z.B. je nach Ausbildung der Wasserzuführleitung mit andern, an sich bekannten Verbindungsmitteln versehen werden.

## Patentansprüche

1. Reinigungsdüse für die Pflege der Zähne, mit einem Düsenkörper (1), der am einen Ende mit einem Kupplungsteil (3) zum lösbaren Anschliessen an eine Wasserzuführleitung versehen ist und an seinem andern Ende einen, über einen im Innern des Düsenkörpers (1) verlaufenden Verbindungskanal (4) mit dem kupplungsseitigen Ende des Düsenkörpers (1) verbundenen Düsenausgang (7) für die Abgabe eines gerichteten Wasserstrahls (8) aufweist, und mit einer im Bereich des Düsenausganges (7) angeordneten, im Düsenkörper (1) gehaltenen Beborstung (10), dadurch gekennzeichnet, dass die Beborstung durch ein einziges, längliches und benachbart zum Düsenausgang (7) angeordnetes Bürstenelement (10) gebildet ist, dessen Längsachse (11) mit der die Achse (9) des Wasserstrahles (8) festlegenden Achse des Düsenausganges (7) einen spitzen Winkel bildet, derart dass für ein Zusammenwirken des Wasserstrahles (8) und des Bürstenelementes (10) der Wasserstrahl (8) gegen das freie Ende (12) des Bürstenelementes (10) gerichtet ist und mindestens teilweise frei am Ende (12) des Bürstenelementes (10) vorbeiläuft.

2. Reinigungsdüse nach Anspruch 1, dadurch gekennzeichnet, dass das Bürstenelement (10) im wesentlichen zylinderförmig oder konisch ausgebildet ist.

3. Reinigungsdüse nach Anspruch 1 oder 2, dadurch gekennzeichnet, dass benachbart zum Bürstenelement (10) mindestens ein weiterer Düsenausgang (7') vorgesehen ist, welcher derart ausgebildet und angeordent ist, dass der daraus austretende Wasserstrahl (8') gegen das Ende (12) des Bürstenelementes (10) gerichtet ist und mindestens teilweise frei am Ende (12) des Bürstenelementes (10) vorbeiläuft.

4. Reinigungsdüse nach Anspruch 1 oder 2, dadurch gekennzeichnet, dass der Düsenausgang ringförmig um das Bürstenelement (10) verläuft.

5. Reinigungsdüse nach einem der Ansprüche 1 bis 4, dadurch gekennzeichnet, dass das Bürstenelement (10) ein Borstenbüschel (10') mit im wesentlichen in Richtung seiner Längsachse (11) verlaufenden Borsten aufweist, das vorzugsweise am vom Düsenkörper (1) entfernten Ende (12) zugespitzt ist.

6. Reinigungsdüse nach einem der Ansprüche 1 bis 4, dadurch gekennzeichnet, dass das Bürstenelement (10) ein im wesentlichen in Richtung seiner Längsachse (11) verlaufendes Tragorgan (15) aufweist, an dem ungefähr in radialer Richtung abstehende und gegebenenfalls wendelförmig angeordnete Borsten (16) vorgesehen sind.

7. Reinigungsdüse nach einem der Ansprüche 1 bis 6, dadurch gekennzeichnet, dass das Bürstenelement (10) wegnehmbar am Düsenkörper (1) befestigt ist, wobei vorzugsweise das Borstenbüschel (10') bzw. das Tragorgan (15) in einem Einsteckelement (14, 17) verankert ist, das in eine entsprechende Ausnehmung (13, 18) des Düsenkörpers (1) herausnehmbar eingesteckt ist.

8. Reinigungsdüse nach Anspruch 7, dadurch gekennzeichnet, dass das Einsteckelement (17) sich durch eine Durchgangsbohrung (18) im Düsenkörper (1) hindurcherstreckt und in dieser lösbar gehalten ist, vorzugsweise durch Reibschluss oder mittels einer Rastanordnung (19, 20).

9. Reinigungsdüse nach Anspruch 1, dadurch gekennzeichnet, dass unterschiedlich beborstete Bürstenelemente (10) vorgesehen sind, die gegeneinander austauschbar am Düsenkörper (1) fixierbar sind.

10. Reinigungsdüse nach einem der Ansprüche 1-9, dadurch gekennzeichnet, dass der Düsenausgang (7) und das Bürstenelement (10) in einem gegenüber dem restlichen Teil des Düsenkörpers (1) abgekröpften Kopf (2) angeordnet sind.

11. Zahnpflegegerät mit einem Wassertank, einer daran angeschlossenen, mit einer Wasserzuführleitung verbundenen Pumpe und mit mindestens einer lösbar mit der Wasserzuführleitung verbundenen Reinigungsdüse nach einem der Ansprüche 1 bis 10.

## Claims

1. A cleaning nozzle for the care of the teeth, with a nozzle body (1), which is provided at one end with a coupling part (3) for detachable attachment to a water supply line, and which has at its other end a nozzle outlet (7) ,connected via a connecting canal (4), running inside the nozzle body (1), with the end of the nozzle body (1) on the coupling side, for the emission of a directed jet of water (8), and with bristles (10), arranged in the region of the nozzle outlet (7) and held in the nozzle body (1), characterised in that the bristles are formed by a single, elongated brush element (10), arranged adjacent to the nozzle output (7), the longitudinal axis (11) of which brush element (10) forms an acute angle with the axis (9) of the nozzle outlet (7) fixing the axis (9) of the jet of water (8), such that for a cooperation of the jet of water (8) and of the brush element (10), the jet of water (8) is directed towards the free end (12) of the brush element (10) and runs, at least partially,freely past the end (12) of the brush element (10).

2. A cleaning nozzle according to Claim 1, characterised in that the brush element (10) is constructed substantially in cylindrical shape or conically.

3. A cleaning nozzle according to Claim 1 or 2, characterised in that adjacent to the brush element (10) at least one further nozzle outlet (7') is provided, which is constructed and arranged such that the jet of water (8') emerging therefrom is directed towards the end (12) of the brush element (10) and runs,at least partially,freely past the end (12) of the brush element (10).

4. A cleaning nozzle according to Claim 1 or 2, characterised in that the nozzle outlet runs in an annular shape around the brush element (10).

5. A cleaning nozzle according to one of Claims 1 to 4, characterised in that the brush element (10) has a tuft of bristles (10') with bristles running substantially in the direction of its longitudinal axis (11), which preferably is tapered at the end (12) away from the nozzle body (1).

6. A cleaning nozzle according to one of Claims 1 to 4, characterised in that the brush element (10) has a carrier member (15) running substantially in the direction of its longitudinal axis (11), on which bristles (16) are provided, projecting approximately in radial direction and, if necessary, arranged in a spiral form.

7. A cleaning nozzle according to one of Claims 1 to 6, characterised in that the brush element (10) is secured on the nozzle body (1) so as to be able to be removed, in which preferably the tuft of bristles (10') or the carrier member (15) is anchored in an insert element (14, 17), which is inserted into a corresponding recess (13,18) of the nozzle body (1) so as to be able to be removed.

8. A cleaning nozzle according to Claim 7, characterised in that the insert element (17) extends through a through bore (18) in the nozzle body (1) and is held detachably therein, preferably by friction locking or by means of a detent arrangement (19, 20).

9. A cleaning nozzle according to Claim 1 , characterised in that brush elements (10) having differing bristles are provided, which are able to be fixed on the nozzle body (1) so as to be able to be exchanged one for another.

10. A cleaning nozzle according to one of Claims 1-9, characterised in that the nozzle outlet (7) and the brush element (10) are arranged in a head (2) which is bent with respect to the remaining part of the nozzle body (1).

11. A tooth care instrument with a water tank, a pump attached thereto, connected with a water supply line, and with at least one cleaning nozzle according to one of Claims 1 to 10, which is detachably connected to the water supply line.

## Revendications

1. Buse de nettoyage pour les soins dentaires, comportant un corps de buse (1), qui est pourvu, à une extrémité, d'une pièce d'accouplement (3) en vue du branchement amovible à une conduite d'arrivée d'eau et qui comporte, à son autre extrémité, une sortie de buse (7), reliée, par un canal de liaison (4) s'étendant à l'intérieur du corps (1) de la buse, avec l'extrémité côté accouplement du corps (1) de la buse, pour la distribution d'un jet d'eau (8) dirigé, et comportant une brosse (10) située dans la zone de la sortie de buse (7), fixée dans le corps de buse (1), caractérisée en ce que la brosse est formée par un seul élément de brosse (10) allongé et situé à proximité de la sortie de buse (7), dont l'axe longitudinal (11) forme avec l'axe de la sortie de buse (7), définissant l'axe (9) du jet d'eau (8), un angle aigu tel que pour faire coopérer le jet d'eau (8) et l'élément de brosse (10), le jet d'eau (8) est dirigé vers l'extrémité libre (12) de l'élément de brosse (10) et passe au moins en partie librement devant l'extrémité (12) de l'élément de brosse (10).

2. Buse de nettoyage selon la revendication 1, caractérisée en ce que l'élément de brosse (10) est sensiblement cylindrique ou conique.

3. Buse de nettoyage selon la revendication 1 ou 2, caractérisée en ce qu'à proximité de l'élément de brosse (10) il est prévu au moins une autre sortie de buse (7') qui est conçue et disposée de manière que le jet d'eau (8') qui en sort est dirigé vers l'extrémité (12) de l'élément de brosse (10) et passe au moins en partie librement devant l'extrémité (12) de l'élément de brosse (10).

4. Buse de nettoyage selon les revendications 1 ou 2, caractérisée en ce que la sortie de buse s'étend en anneau autour de l'élément de brosse (10).

5. Buse de nettoyage selon l'une des revendications 1 à 4, caractérisée en ce que l'élément de brosse (10) comporte une touffe de poils (10') avec des poils s'étendant sensiblement dans la direction de son axe longitudinal (11), qui est effilée de préférence à l'extrémité (12) éloignée du corps de buse (1).

6. Buse de nettoyage selon l'une des revendications 1 à 4, caractérisée en ce que l'élément de brosse (10) comporte un organe de support (15) s'étendant sensiblement dans la direction de son axe longitudinal (15), sur lequel sont prévus des poils (16) faisant saillie à peu près dans la direction radiale et disposés éventuellement en spirale.

7. Buse de nettoyage selon l'une des revendications 1 à 6, caractérisée en ce que l'élément de brosse (10) est fixé sur le corps de buse (1) de manière à pouvoir être enlevé, de préférence la touffe de poils (10') ou l'organe de support (15) étant ancré dans un élément emboîtable (14, 17) qui est emboîté, de manière à pouvoir être extrait, dans un évidement (13, 18) correspondant du corps de buse (1).

8. Buse de nettoyage selon la revendication 7, caractérisée en ce que l'élément emboîtable (17) s'étend à travers un trou débouchant (18) pratiqué dans le corps de buse (1) et est maintenu amovible dans celui-ci, de préférence par friction ou au moyen d'un dispositif à encliquetage (19, 20).

9. Buse de nettoyage selon la revendication 1, caractérisée en ce que des éléments de brosse (10), comportant des poils différents, sont prévus et peuvent être fixés sur le corps de buse (1), de manière interchangeable.

10. Buse de nettoyage selon l'une des revendications 1 à 9, caractérisée en ce que la sortie de buse (7) et l'élément de brosse (10) sont placés dans une tête (2) coudée par rapport à la partie restante du corps de buse (1).

11. Appareil de soins dentaires comportant un réservoir d'eau, une pompe raccordée à celui-ci, reliée à une conduite d'arrivée d'eau et comportant au moins une buse de nettoyage, reliée de manière amovible à la conduite d'arrivée d'eau, selon l'une des revendications 1 à 10.
